**Europäisches Patentamt**

**European Patent Office**

**Office européen des brevets**

(19)

(11) Veröffentlichungsnummer : **0 178 523 B1**

(12) **EUROPÄISCHE PATENTSCHRIFT**

(45) Veröffentlichungstag der Patentschrift :
17.05.89

(51) Int. Cl.⁴ : **B 29 C 47/12, B 29 C 47/20**

(21) Anmeldenummer : 85112381.0

(22) Anmeldetag : 30.09.85

(54) Extrusionsdüse für einen Blaskopf zur Herstellung von Kunststoffblasfolien.

(30) Priorität : 17.10.84 DE 8430508 U

(43) Veröffentlichungstag der Anmeldung :
23.04.86 Patentblatt 86/17

(45) Bekanntmachung des Hinweises auf die Patenterteilung : 17.05.89 Patentblatt 89/20

(84) Benannte Vertragsstaaten :
DE FR GB IT

(56) Entgegenhaltungen :
EP–A– 0 133 213
CH–A– 461 790
US–A– 4 329 314

(73) Patentinhaber : **Windmöller & Hölscher**
**Münsterstrasse 48-52**
**D-4540 Lengerich i.W. (DE)**

(72) Erfinder : **Achelpohl, Fritz**
**Banningstrasse 3**
**D-4540 Lengerich (DE)**
Erfinder : **Winkler, Gerhard**
**Hans-Sachs-Strasse 10**
**D-4540 Lengerich (DE)**
Erfinder : **Tüpker, Hermann**
**Gabeliner-Weg 6**
**D-4535 Westerkapeln (DE)**
Erfinder : **Linkies, Jürgen**
**Berliner-Strasse 6**
**D-4506 Hagen a.T.W. (DE)**

(74) Vertreter : **Lorenz, Eduard et al**
**Rechtsanwälte Eduard Lorenz - Bernhard Seidler**
**Margrit Seidler - Dipl.-Ing. Hans-K. Gossel Dr. Ina**
**Philipps - Dr. Paul B. Schäuble Dr. Siegfried Jacker-**
**meier**
**Widenmayerstrasse 23 D-8000 München 22 (DE)**

## Beschreibung

Die Erfindung betrifft eine Extrusionsdüse für einen Blaskopf zur Herstellung von Kunststoffblasfolien mit einem Innen- und einem Außenring aus einem Werkstoff auf Eisenbasis, vorzugsweise Stahl, die zwischen sich einen ringförmigen Düsenspalt begrenzen.

Aufgrund unterschiedlich langer Fließwege der Kunststoffschmelze von der Extruderschnecke bis zur Extrusionsdüse oder anderer Inhomogenitäten kann sich im Austrittsbereich des Düsenspalts über den Umfang des extrudierten Schlauches ein ungleichmäßiges Temperaturprofil einstellen, das außerhalb des Toleranzbereiches liegende Dickenabweichungen der Kunststoffblasfolie verursachen kann.

Bei einer aus der DE-AS 21 40 194 bekannten Extrusionsdüse der eingangs angegebenen Art ist der Außenring in mehrere mit einzelnen Temperierkammern versehene Temperiersegmente unterteilt, die mit getrennten Einlaß- und Auslaßöffnungen für das Heiz-oder Kühlmedium versehen sind, so daß sich durch eine entsprechende Steuerung der Einspeisung des Heiz- oder Kühlmediums in die Temperierkammern die sich aufgrund unterschiedlicher Fließgeschwindigkeiten und Strömungswege der Kunststoffschmelze einstellenden ungleichförmigen Temperaturzonen beheben lassen.

Aus der gattungsbildenden DE-OS 32 11 833 ist eine Extrusionsdüse der eingangs angegebenen Art bekannt, bei der die Innen- und Außenringe mit ringspaltförmigen Kanälen versehen sind, die teilweise mit einem im Arbeitstemperaturbereich des Blaskopfes verdampfbaren und wieder kondensierbaren Wärmeaustauschmedium gefüllt sind, so daß Temperaturschwankungen über die Ringspalthöhe und/oder über den Umfang dadurch ausgeglichen werden, daß das Wärmeaustauschmedium in heißeren Ringspaltbereichen verdampft und an kühleren Stellen wieder kondensiert.

Aufgabe der Erfindung ist es, eine Extrusionsdüse der eingangs angegebenen Art zu schaffen, bei der sich mit einfacheren Mitteln im Düsenspalt sowohl in axialer Richtung als auch in Umfangsrichtung ein vergleichmäßigtes Temperaturprofil erreichen läßt.

Erfindungsgemäß wird diese Aufgabe dadurch gelöst, daß die den Düsenspalt begrenzenden Wandungen der Innen- und Außenringe mit einer Schicht aus einem metallischen Werkstoff mit höherer Wärmeleitfähigkeit als Stahl verbunden sind.

Die Schicht aus einem hochleitfähigen Material führt zu einer Vergleichmäßigung der Temperatur in axialer Richtung und in Umfangsrichtung. Weiterhin vermag die Schicht aufgenommene Wärme an die Schmelze abzugeben. Ein Wärmeausgleich in entgegengesetzter Richtung findet dann statt, wenn die Schmelzetemperatur über der Temperatur der Schicht liegt. Durch die erfindungsgemäße Schicht wird eine Vergleichmäßigung der wandnahen Schmelzetemperaturen im Düsenspalt erreicht, was zu verbesserten Schlauchfolienqualitäten und insbesondere zu besseren Foliendickentoleranzen führt.

Während Stahl eine Wärmeleitzahl von etwa

$$= 0,12 \ cal/(cm \times s \times grd)$$

aufweist, beträgt die Wärmeleitzahl hochleitfähiger Legierungen, die erfindungsgemäß zum Einsatz kommen können,

$$= 0,7 \ cal/(cm \times s \times grd).$$

Zweckmäßigerweise bestehen die Schichten aus Buchsen, die auf die Ringe aufgesetzt werden und bei Bedarf austauschbar sind.

Zwischen den Buchsen und den Ringen kann eine wärmeisolierende Schicht angeordnet werden, die einen Wärmeausgleich in axialer Richtung und in Umfangsrichtung begünstigt.

Die Schicht kann auch aus einer aufgespritzten oder aufgeschleuderten Beschichtung bestehen.

In weiterer Ausgestaltung der Neuerung können die Innen- und Außenringe und/oder die diesen zugewandten Seiten der Buchsen mit nutförmigen Kammern versehen sein, an die Leitungen für Kühl- oder Wärmemittel angeschlossen sind.

Ein Ausführungsbeispiel der Neuerung wird nachstehend anhand der Zeichnung näher erläutert. In dieser zeigen die

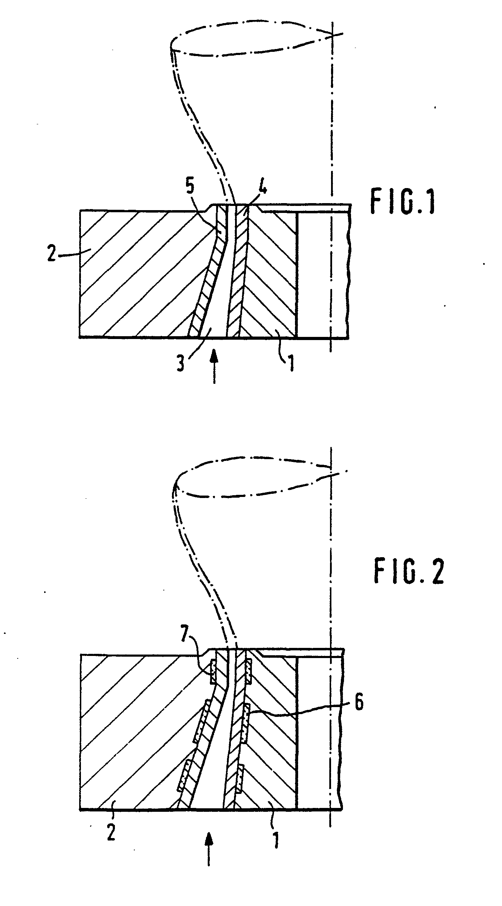

Fig. 1 bis 3 Querschnitte durch ringförmige Extrusionsdüsen unterschiedlicher Ausführungsformen.

Der Düsenring nach Fig. 1 besteht aus einem Innenring 1 und einem Außenring 2, die in nicht dargestellter Form auf einem üblicherweise mehrteiligen Verteiler des Blaskopfes befestigt sind. Zwischen den Ringen 1, 2 ist ein sich nach oben hin im Querschnitt keilförmig verengender Ringraum gebildet, wobei der obere Bereich des Ringraumes über einen gewissen Teil seiner axialen Länge eine gleiche Breite aufweist. Die dem Ringraum 3 zugewandten Wandungen der Ringe 1, 2 tragen Buchsen 4, 5 aus einem hochwärmeleitfähigen Metall.

Bei der Ausführungsform nach Fig. 2 sind die Ringe 1, 2 auf ihren dem Spalt 3 zugewandten Seiten mit Ringnuten 6, 7 versehen, die mit einem wärmeisolierenden Material gefüllt sind.

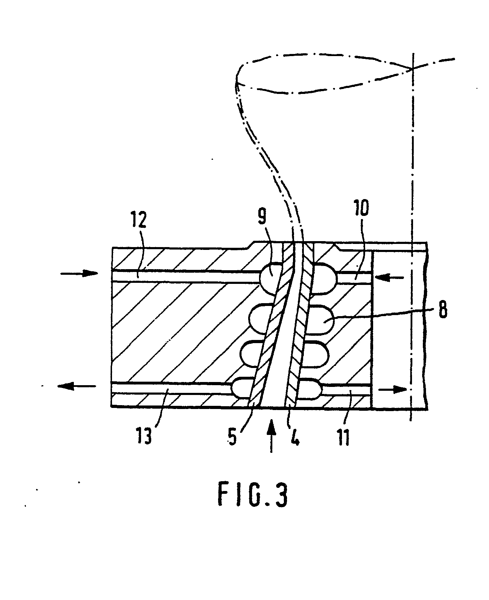

Bei der Ausführungsform nach Fig. 3 sind die Ringe 1, 2 mit Ringnuten 8, 9 versehen, die in jedem Ring miteinander und mit den Zuführungs- und Abführungsleitungen 10, 11 und 12, 13 verbunden sind, so daß durch die durch die Ringnuten, die von den Buchsen 4, 5 abgedeckt sind, gebildeten Kanäle kühlende oder wärmende Medien strömen können.

**Patentansprüche**

1. Extrusionsdüse für einen Blaskopf zur Herstellung von Kunststoffblasfolien mit einem Innen- und einem Außenring aus einem Werkstoff auf Eisenbasis, vorzugsweise Stahl, die zwischen sich einen ringförmigen Düsenspalt begrenzen, dadurch gekennzeichnet, daß die den Düsenspalt (3) begrenzenden Wandungen der Innen- und Außenringe (1, 2) mit einer Schicht (4, 5) aus einem metallischen Werkstoff mit höherer Wärmeleitfähigkeit als Stahl verbunden sind.

2. Extrusionsdüse nach Anspruch 1, dadurch gekennzeichnet, daß die Schicht aus einer Buchse (4, 5) besteht.

3. Extrusionsdüse nach Anspruch 2, dadurch gekennzeichnet, daß zwischen den Buchsen (4, 5) und den Innen- und Außenringen (1, 2) eine wärmeisolierende Schicht (6, 7) angeordnet ist.

4. Extrusionsdüse nach Anspruch 1, dadurch gekennzeichnet, daß die Schicht aus einer aufgespritzten oder aufgeschleuderten Beschichtung mit einer Schichtstärke von mindestens von 0,2 mm besteht.

5. Extrusionsdüse nach einem der Ansprüche 1 bis 3, dadurch gekennzeichnet, daß die Innen- und Außenringe (1, 2) und/oder die diesen zugewandten Seiten der Buchsen (4, 5) ringnutförmige Kammern (8, 9) aufweisen, an die Kühl- oder Wärmemittelleitungen (10, 11, 12, 13) angeschlossen sind.

## Claims

1. An extrusion nozzle for a blowing head for producing blown plastics foils, having an inner ring and an outer ring comprising an iron-base and preferably a steel-base material, the rings defining an annular nozzle gap between them, characterised in that the walls of the inner and outer rings (1, 2), which define the nozzle gap (3), are connected to a layer (4, 5) comprising a metal material with a higher level of thermal conductivity than steel.

2. An extrusion nozzle according to claim 1 characterised in that the layer comprises a bush (4, 5).

3. An extrusion nozzle according to claim 2 characterised in that a heat-insulating layer (6, 7) is arranged between the bushes (4, 5) and the inner and outer rings (1, 2).

4. An extrusion nozzle according to claim 1 characterised in that the layer comprises a coating which is applied by a spraying operation or by a spin coating operation, the thickness of the layer being at least 0.2 mm.

5. An extrusion nozzle according to one of claims 1 to 3 characterised in that the inner and outer rings (1, 2) and/or the sides of the bushes (4, 5), which are towards the rings, have chambers (8, 9) which are in the form of annular grooves and to which the cooling or heating agent conduits (10, 11, 12, 13) are connected.

## Revendications

1. Filière d'extrusion pour une tête soufflante pour la fabrication de feuilles synthétiques soufflées comportant un anneau intérieur et un anneau extérieur dans un matériau à base de fer, de préférence d'acier, qui délimitent entre eux une fente de filière annulaire, caractérisée en ce que, les parois des anneaux intérieur et extérieur (1, 2) limitant la fente de filière (3) sont liées à une couche (4, 5) d'un matériau métallique ayant une conductivité thermique supérieure à l'acier.

2. Filière d'extrusion selon la revendication 1, caractérisée en ce que la couche consiste en une douille (4, 5).

3. Filière d'extrusion selon la revendication 2, caractérisée en ce qu'une couche d'isolation thermique (6, 7) est disposée entre les douilles (4, 5) et les anneaux intérieur et extérieur (1, 2).

4. Filière d'extrusion selon la revendication 1, caractérisée en ce que la couche consiste en un enduit giclé ou centrifugé ayant une épaisseur d'au moins 0,2 mm.

5. Filière d'extrusion selon l'une des revendications 1 à 3, caractérisée en ce que les anneaux intérieur et extérieur (1, 2) et/ou le côté des douilles (4, 5) orienté vers les anneaux présente des chambres (8, 9) en forme de rainures annulaires auxquelles sont raccordées des conduites (10, 11, 12, 13) d'agent réfrigérant ou réchauffant.

FIG.1

FIG.2

FIG.3